(19) Europäisches Patentamt / European Patent Office / Office européen des brevets

(11) **EP 1 579 197 B1**

(12) **FASCICULE DE BREVET EUROPEEN**

(45) Date de publication et mention de la délivrance du brevet:
**22.02.2017 Bulletin 2017/08**

(21) Numéro de dépôt: **03810019.4**

(22) Date de dépôt: **24.12.2003**

(51) Int Cl.:
**G01N 21/21** *(2006.01)*

(86) Numéro de dépôt international:
**PCT/FR2003/050211**

(87) Numéro de publication internationale:
**WO 2004/061432 (22.07.2004 Gazette 2004/30)**

(54) **PROCÉDÉ DE CARACTÉRISATION OPTIQUE DE MATERIAUX SANS UTILISATION DE MODÈLE PHYSIQUE**

VERFAHREN ZUR OPTISCHEN CHARAKTERISIERUNG VON MATERIALEN OHNE VERWENDUNG EINES PHYSIKALISCHEN MODELLS

METHOD FOR THE OPTICAL CHARACTERIZATION OF MATERIALS WITHOUT USING A PHYSICAL MODEL

(84) Etats contractants désignés:
**AT BE BG CH CY CZ DE DK EE ES FI FR GB GR HU IE IT LI LU MC NL PT RO SE SI SK TR**

(30) Priorité: **30.12.2002 FR 0216847**
**02.10.2003 FR 0350635**

(43) Date de publication de la demande:
**28.09.2005 Bulletin 2005/39**

(73) Titulaire: **Commissariat à l'Énergie Atomique et aux Énergies Alternatives**
**75015 Paris (FR)**

(72) Inventeur: **HAZART, Jérôme**
**F-38000 Grenoble (FR)**

(74) Mandataire: **Ahner, Philippe et al**
**BREVALEX**
**95, rue d'Amsterdam**
**75378 Paris Cedex 8 (FR)**

(56) Documents cités:
**WO-A-02/27288      US-A- 5 956 145**

- **BHATTACHARYYA D ET AL: "SPECTROSCOPIC ELLIPSOMETRY OF MULTILAYER DIELECTRIC COATINGS" VACUUM, PERGAMON PRESS, GB, vol. 60, no. 4, mars 2001 (2001-03), pages 419-424, XP002954104 ISSN: 0042-207X**
- **GARRIGUES JEAN: "La méthode des éléments finis." NONE, [Online] janvier 2002 (2002-01), XP002254500 Extrait de l'Internet: URL:http://esm2.imt-mrs.fr/gar/EF0.pdf> [extrait le 2003-09-15]**
- **MINHAS B K ET AL: "ELLIPSOMETRIC SCATTEROMETRY FOR THE METROLOGY OF SUB-0.1-MUM-LINEWIDTH STRUCTURES" APPLIED OPTICS, OPTICAL SOCIETY OF AMERICA, WASHINGTON, US, vol. 37, no. 22, 1 août 1998 (1998-08-01), pages 5112-5115, XP001162836 ISSN: 0003-6935 cité dans la demande**
- **TERRY F L: "A MODIFIED HARMONIC OSCILLATOR APPROXIMATION SCHEME FOR THE DIELECTRIC CONSTANTS OF ALXGA1-XAS" JOURNAL OF APPLIED PHYSICS, AMERICAN INSTITUTE OF PHYSICS. NEW YORK, US, vol. 70, no. 1, 1 juillet 1991 (1991-07-01), pages 409-417, XP001161276 ISSN: 0021-8979 cité dans la demande**

**Description**

**DOMAINE TECHNIQUE**

La présente invention concerne un procédé de caractérisation optique de matériaux.

Ce procédé permet de caractériser des couches minces ou épaisses de ces matériaux, qui sont formées sur des substrats. Les grandeurs physiques, que ce procédé permet de déterminer, sont:

- l'épaisseur d'une couche d'un matériau,
- l'indice de réfraction de ce matériau, et
- le coefficient d'absorption de ce matériau.

La caractérisation optique des matériaux est utile pour l'analyse chimique de ces matériaux (notamment étude des bandes d'absorption, des propriétés de densification et des propriétés d'oxydation), dans les domaines de la microélectronique, des capteurs, de la biologie, de la médecine), ou bien pour l'analyse des épaisseurs de dépôts de ces matériaux.

Pour des exemples d'application, on se reportera au document [1] qui, comme les autres documents cités par la suite, est mentionné à la fin de la présente description.

La caractérisation des propriétés optiques d'un matériau est également utile lorsque le matériau est par la suite structuré ( pour y former par exemple des gravures ou des rugosités) et que les propriétés de diffraction optique de la structure obtenue doivent être calculées (voir le document [2]).

Indiquons dès à présent que l'invention est particulièrement utile lorsque la loi physique suivie par l'indice de réfraction complexe du matériau que l'on veut caractériser n'est, a priori, pas connue.

**ETAT DE LA TECHNIQUE ANTERIEURE**

On rappelle que les mesures optiques peuvent être de diverses natures :

Il peut s'agir de mesures réflectométriques. Dans ce cas, le coefficient de réflexion en intensité d'une structure est mesuré sur un spectre (c'est-à-dire un intervalle) de longueurs d'ondes $[\lambda_m, \lambda_M]$.

L'angle d'incidence de la lumière d'éclairement peut être non nul. Le coefficient de réflexion peut être mesuré pour plusieurs angles d'incidence $\theta$. Nous noterons $R (\theta, \lambda, p)$ le spectre réflectométrique, où p est la polarisation du faisceau incident et $\lambda$ la longueur d'onde de ce dernier.

Généralement, l'angle $\theta$ est nul et la polarisation p indéterminée. Dans le cas où $\theta$ n'est pas nul, il faut connaître cette polarisation p. En général, cette dernière est de type (S) où (P).

Il peut s'agir aussi de mesures ellipsométriques. Les grandeurs mesurées sont alors les parties réelle et imaginaire du rapport du coefficient de réflexion en polarisation (P) au coefficient de réflexion en polarisation (S).

On note généralement $\rho=|\rho|\exp(j\Delta)$ ce rapport complexe (avec $j^2=-1$). Les grandeurs généralement traitées sont $|\rho|$, que l'on note $\tan(\psi)$, et $\cos(\Delta)$, ou des combinaisons des deux.

Par exemple, les variables issues d'un ellipsomètre à modulation de phase sont les suivantes :

$$I_s=\sin(2\psi)\sin(\Delta) \quad \text{et} \quad I_c=\cos(2\psi).$$

Un ellipsomètre classique fournit, quant à lui, les variables suivantes :

$$\alpha=(\tan^2\psi-1)/(\tan^2\psi+1) \quad \text{et} \quad \beta=\cos\Delta(1-\alpha^2)^{1/2}.$$

Par souci de généralité, nous noterons $S_1$ et $S_2$ les grandeurs traitées.

Les spectres $S_i$, $i\in [1, 2]$, sont mesurés sur une plage de longueurs d'ondes $[\lambda_m, \lambda_M]$. L'angle d'incidence peut être quelconque. Plusieurs spectres peuvent être mesurés à différents angles d'incidence afin d'obtenir un spectre plus riche. Nous noterons $s(\theta,\lambda)=\{S_1(\theta,\lambda),S_2(\theta,\lambda)\}$ le spectre ellipsométrique.

De façon complémentaire, des mesures goniométriques (coefficient de réflexion en fonction de l'angle d'incidence) peuvent être ajoutées aux mesures servant à la caractérisation, afin de déterminer l'épaisseur des diverses couches, pour une ou plusieurs longueurs d'ondes. Ces mesures ne sont pas suffisantes en elles-mêmes puisque l'on veut déterminer l'indice de réfraction complexe sur une gamme spectrale allant de $\lambda_m$ à $\lambda_M$.

Afin de simplifier l'exposé, nous noterons $\Psi$ un ensemble de spectres réflectométrique ou/et ellipsométrique(s) (et éventuellement goniométriques pour quelques longueurs d'ondes).

Sans perdre aucune généralité, nous n'exposerons, dans la présente description, le mode d'utilisation des procédés de l'art antérieur et de la présente invention que dans le cas d'une seule couche mince d'un matériau, formée sur un substrat connu.

L'épaisseur de cette couche est notée $\varepsilon$ et l'indice de réfraction complexe du matériau à la longueur d'onde $\lambda$ est noté n* $(\lambda)$.

On rappelle à ce propos que la partie réelle (respectivement imaginaire) de cet indice de réfraction complexe est notée $n(\lambda)$ (respectivement $k(\lambda)$) et appelée "indice de réfraction" (respectivement "coefficient d'extinction").

En outre on note Er $(\Psi^{(1)}, \Psi^{(2)})$ une fonction d'erreur (par exemple l'écart quadratique moyen) entre deux spectres $\Psi^{(1)}$ et $\Psi^{(2)}$.

Par exemple, on pourra prendre, lorsque l'on dispose de spectres ellipsométriques sur plusieurs angles $\theta_i$, $i \in \{1..n\}$, et d'un spectre réflectométrique :

$$E_r(\Psi^{(1)}, \Psi^{(2)}) =$$

$$\frac{1}{\lambda_M - \lambda_m} \int_{\lambda m}^{\lambda M} \left[ \frac{1}{n} \sum_{i=1}^{n} \left[ S_1^{(1)}(\theta_i, \lambda) - S_1^{(2)}(\theta_i, \lambda) \right]^2 + \left[ S_2^{(1)}(\theta_i, \lambda) - S_2^{(2)}(\theta_i, \lambda) \right]^2 \right.$$

$$\left. + \left[ R^{(1)}(\lambda) - R^{(2)}(\lambda) \right]^2 \right] d\lambda \qquad (1)$$

avec

$$\Psi^{(1)}(\lambda) = \{ S_1^{(1)}(\theta_i, \lambda), S_2^{(1)}(\theta_i, \lambda), R^{(1)}(\lambda) \}$$

$$\Psi^{(2)}(\lambda) = \{ S_1^{(2)}(\theta_i, \lambda), S_2^{(2)}(\theta_i, \lambda), R^{(2)}(\lambda) \}$$

et $i \in \{1...n\}$

Des facteurs de pondération peuvent être apportés à l'intégrale de façon à ce que la fonction d'erreur puisse tenir compte de variations sur la précision de mesure des spectres.

La caractérisation optique de couches de matériaux s'articule généralement autour de deux applications :

La première application est le contrôle dimensionnel du dépôt de couches minces que l'on utilise en microélectronique.

Généralement on connaît bien le matériau déposé, c'est-à-dire que l'on connaît bien l'indice de réfraction complexe de ce matériau aux longueurs d'ondes de la lumière utilisée pour la caractérisation.

Les lois suivies par l'indice de réfraction complexe sont soit tabulées, soit approchées par des lois physiques connues telles que, par exemple, le modèle de Cauchy, le modèle de Sellmeier (voir le document [3]), les lois de Forouhi (voir le document [4]), et les lois lois d'oscillateurs harmoniques (voir le document [5]). Ces lois sont définies par un nombre fini de paramètres.

Par exemple, une loi de type Cauchy sans absorption, à deux paramètres, est définie de la manière suivante :

$$\mathrm{Re}[n*(\lambda)] = n(\lambda) = a_0 + \frac{a_1}{\lambda^2}$$

$$\mathrm{Im}[n*(\lambda)] = k(\lambda) = 0$$

Lorsque l'on est sûr de la valeur des coefficients $a_i$ ($i \in \{0,1\}$) mais que l'on ne connaît pas l'épaisseur, un algorithme de recherche est utilisé afin de trouver l'épaisseur qui minimise l'erreur entre la mesure $\Psi$ et la réponse

théorique $\overline{\Psi}$ compte tenu de l'indice modélisé.

L'algorithme de recherche peut être, par exemple, la méthode du Simplex, la recherche Tabou, la méthode de Levendt-Marquart ou la méthode du recuit simulé (voir le chapitre 10 du document [6]).

Lorsque l'indice de réfraction est approximatif, les coefficients $a_i$ sont intégrés dans la procédure d'ajustement de $\Psi$ et $\overline{\Psi}$. La recherche des coefficients $a_i$ constitue un procédé de caractérisation de l'indice de réfraction.

Cependant, lorsque la loi suivie par cet indice de réfraction est inconnue (il arrive que le matériau soit inconnu ou qu'il ne soit pas bien décrit par une loi physique connue), ce procédé reste approximatif et l'épaisseur risque d'être fausse.

La deuxième application est la caractérisation des matériaux.

Le procédé utilisé reste le même, mis à part que le matériau n'est pas bien connu. C'est précisément la fonction d'indice de réfraction complexe la plus proche de la réalité qui est visée.

Le type de loi peut être choisi par analogie avec d'autres matériaux. Cependant, la loi suivie par l'indice de réfraction complexe peut être compliquée, ce qui est par exemple le cas d'une loi d'oscillateurs harmoniques :

$$[n(E)+jk(E)]^2 = 1 + \sum_{i=1}^{n} \frac{Ai}{E+Ei+j\Gamma i} - \frac{Ai}{E-Ei+j\Gamma i}$$

Dans l'expression ci-dessus, $j^2=-1$ et l'indice de réfraction et le coefficient d'extinction sont exprimés non pas en fonction de $\lambda$ mais de E, avec E= 1240/$\lambda$ ($\lambda$ en nm).

Dans ce cas, les coefficients des oscillateurs sont difficiles à trouver si l'on n'a pas leur ordre de grandeur. La recherche est difficilement automatisable, les algorithmes de recherche pouvant donner des réponses erronées et le temps perdu peut être considérable.

Il existe une alternative à la recherche des coefficients : la méthode point-à-point (PAP). Cette méthode PAP propose de ne pas choisir de loi physique et de rechercher l'indice de réfraction complexe du matériau pour chaque longueur d'onde $\lambda_i$, où $i \in [1...n]$, avec $\lambda_1=\lambda_m$ et $\lambda_n=\lambda_M$.

Pour chaque $\lambda_i$, un algorithme de recherche tente de trouver l'épaisseur, l'indice $n(\lambda_i)$ et le coefficient d'extinction $k(\lambda_i)$ qui minimisent l'erreur entre la mesure $\Psi(\lambda_i)$ et la réponse théorique $\overline{\Psi}(\lambda_i,n(\lambda_i),k(\lambda_i),\varepsilon)$.

Un tel procédé pose un problème parce que les divers points $(\lambda_i,\varepsilon,n(\lambda_i),k(\lambda_i))$ ne sont pas forcément physiquement compatibles entre eux : par exemple, l'épaisseur trouvée peut varier en fonction de la longueur d'onde et la loi suivie par l'indice de réfraction complexe, plus simplement appelée loi d'indice, peut présenter des discontinuités.

Ce procédé est généralement valable seulement lorsque l'épaisseur est très bien connue et que les mesures sont de très bonne qualité. Des documents représentant l'état de l'art pertinent sont par exemple: BHATTACHARYYA et al. "SPECTROSCOPIC ELLIPSOMETRY OF MULTILAYER DIELECTRIC COATINGS" VACUUM, 60(4) 419-424 et GARRIGUES JEAN: "La méthode des éléments finis." janvier 2002.

## EXPOSÉ DE L'INVENTION

La présente invention a pour but de remédier aux inconvénients précédents.

Le procédé objet de l'invention permet de caractériser un matériau sans utiliser un modèle physique, c'est-à-dire sans utiliser une loi physique suivie par l'indice de réfraction complexe du matériau étudié. Il est donc tout particulièrement utile lorsqu'une telle loi n'est pas connue.

Ce procédé constitue une alternative aux procédés de caractérisation connus, mentionnés plus haut. Il peut être appelé "méthode des noeuds" car il utilise des "noeuds" c'est-à-dire des points de coordonnées $(\lambda_i, n_i^*)$, où $n_i^*$ est la valeur prise par l'indice de réfraction complexe à la longueur d'onde $\lambda_i$ et $\underline{i}$ prend un nombre limité de valeurs (entières).

De façon précise, la présente invention a pour objet un procédé de caractérisation optique d'au moins une couche d'un matériau dans un intervalle A de valeurs prises par une fonction $\alpha$ d'une longueur d'onde optique $\lambda$, lorsque $\lambda$, varie dans un intervalle de longueurs d'ondes, cette couche étant formée sur un substrat, ce procédé étant caractérisé en ce qu'il comprend les étapes suivantes :

1) on effectue un ensemble de mesures de réflectométrie et/ou d'ellipsométrie sur l'intervalle A, cet ensemble de mesures conduisant à un spectre mesuré, noté $\Psi$, et l'on choisit les méthodes de calcul associées à la nature des mesures et au type de couche à caractériser,

2) on choisit m valeurs initiales $\alpha_1 ... \alpha_m$ de la fonction $\alpha$, appartenant à cet intervalle A, m étant un nombre entier au moins égal à 1, et l'on définit un intervalle B comme étant l'ensemble des points $\alpha$ de l'intervalle allant du plus petit au plus grand des nombres $\alpha_1 \ldots \alpha_m$, lorsque m est supérieur à 1, et comme étant l'intervalle A lorsque m vaut 1,

3) on choisit m valeurs initiales complexes d'un indice de réfraction complexe n*=n+jk aux m points $\alpha_i$, i allant de 1 à m,

4) lorsque m est différent de 1, on choisit une loi d'interpolation qui permet de calculer l'indice de réfraction n($\alpha$) du matériau sur l'intervalle B, à partir des points ($\alpha_i$, $n_i$), avec $n_i$=n($\alpha_i$), i allant de 1 à m, et lorsque m vaut 1, n($\alpha$) est pris égal au nombre $n_1(\alpha_1)$ sur tout l'intervalle B,

5) on choisit M paramètres variables, M étant inférieur ou égal à 2m+1,

6) on choisit une fonction d'erreur Er($\Psi$, $\overline{\Psi}$) qui caractérise l'écart entre un spectre mesuré $\Psi$ et un spectre théorique $\overline{\Psi}$,

7) à l'aide d'une fonction de minimisation de Er($\Psi$, $\overline{\Psi}$) à M paramètres, on effectue la série d'étapes suivante :

a) à l'aide de la loi d'interpolation des ($\alpha_i$,$n_i$) sur l'intervalle B, on déduit n($\alpha$), $\alpha$ appartenant à B,

b) à l'aide de n($\alpha$) et de l'épaisseur $\varepsilon$ de la couche, et de méthodes de calcul de spectres, on calcule un spectre théorique $\overline{\Psi}$(n($\alpha$),$\varepsilon$),

c) on compare $\Psi$ et $\overline{\Psi}$ l'aide de Er($\Psi$, $\overline{\Psi}$) et, si Er($\Psi$, $\overline{\Psi}$) est suffisamment petite, c'est-à-dire inférieure à une valeur prédéfinie $\underline{e}$, ou est minimale, on passe à l'étape e), sinon on passe à l'étape d),

d) on fait varier les M paramètres variables de façon à tendre vers le minimum de Er($\Psi$, $\overline{\Psi}$) et l'on retourne à l'étape a),

e) si Er($\Psi$, $\overline{\Psi}$) est inférieure à e, on obtient donc un ensemble de M paramètres variables, pour lequel Er($\Psi$, $\overline{\Psi}$(n($\alpha$,M),$\varepsilon$)) est minimum et l'indice de réfraction est alors pris égal à celui qui a été obtenu en dernier, et si Er($\Psi$, $\overline{\Psi}$) est supérieure ou égale à $\underline{e}$ on passe à l'étape 8),

8) on augmente le nombre m de valeurs initiales de la fonction $\alpha$ et l'on retourne à l'étape 2).

Il est donc par exemple possible d'effectuer la caractérisation optique :

- sur un intervalle de longueurs d'ondes $\lambda$, en l'occurrence l'intervalle [$\lambda$min, $\lambda$max],
- ou sur un intervalle de longueurs d'ondes inverses 1/$\lambda$, en l'occurrence sur un intervalle [(1/$\lambda$)min, (1/$\lambda$)max], où (1/$\lambda$)min est égal à 1/($\lambda$max) et (1/$\lambda$)max à 1/($\lambda$min),
- ou sur un intervalle d'énergies E (avec E = h$\nu$ = hc/$\lambda$, où h est la constante de Planck, c la vitesse de la lumière dans le vide et $\nu$ la fréquence correspondant à $\lambda$), en l'occurrence sur un intervalle [Emin, Emax], où Emin est égal à hc/ ($\lambda$max) et Emax à hc/ ($\lambda$min),
- ou, plus généralement, sur un intervalle [$\alpha$min, $\alpha$max] de valeurs prises par une fonction $\alpha$ de la variable $\lambda$.

Il convient en outre de noter que l'invention est utilisable pour caractériser un spectre ou une partie de spectre.

Chaque loi d'interpolation peut être choisie parmi les lois d'interpolation linéaires, les lois d'interpolation cubiques, les lois d'interpolation polynômiales et les lois d'interpolation par exemple de type fonction « spline ».

Selon un mode de mise en oeuvre préféré du procédé objet de l'invention, le spectre est échantillonné uniformément en $\alpha$ ($\lambda$), c'est-à-dire que les valeurs initiales de la fonction $\alpha$ (voir l'étape 2) mentionnée plus haut) sont réparties de manière uniforme dans l'intervalle A, la répartition des noeuds étant ainsi homogène.

Comme on l'a vu, $\alpha(\lambda)$ peut être choisi parmi $\lambda$, 1/$\lambda$, et hc/$\lambda$ ou toute autre fonction de $\lambda$, où h est la constante de Planck et c est la vitesse de la lumière dans le vide.

De préférence, à l'étape 6) mentionnée plus haut, on mesure l'erreur sur un intervalle d'intérêt C qui est inclus dans l'intervalle B ou égal à cet intervalle B.

Les M paramètres variables peuvent être les parties réelles des indices de réfraction aux points $\alpha_i$, i allant de 1 à m, ou les parties imaginaires de ces indices de réfraction, ou ces M paramètres variables peuvent être constitués par l'épaisseur du matériau dont on cherche l'indice de réfraction.

La présente invention a aussi pour objet un autre procédé de caractérisation optique d'au moins une couche d'un matériau dans un intervalle de longueurs d'ondes [$\lambda$ min, $\lambda$ max], cette couche étant formée sur un substrat, cet autre procédé étant caractérisé en ce que :

- on effectue un ensemble de mesures de réflectométrie et/ou d'ellipsométrie, cet ensemble de mesures conduisant à un spectre mesuré, noté $\Psi$,
- on choisit m longueurs d'ondes initiales $\lambda_1 \ldots \lambda_m$ appartenant à cet intervalle, m étant un nombre entier au moins égal à 1, on associe, à chaque longueur d'onde, un indice de réfraction,
- on choisit une loi d'interpolation au moins pour l'indice de réfraction du matériau, pour les longueurs d'ondes comprises entre les longueurs d'ondes initiales $\lambda_1 \ldots \lambda_m$,
- on choisit M paramètres initiaux, M étant au moins égal à m, à savoir un indice de réfraction initial $n_i$ pour chaque longueur d'onde initiale $\lambda_i$, $1 \le i \le m$, les longueurs d'ondes initiales étant choisies de manière à pouvoir déterminer par interpolation au moins l'indice de réfraction pour toute longueur d'onde de l'intervalle [$\lambda$, min, $\lambda$ max], les couples

($\lambda_i$, $n_i$) étant appelés noeuds,

- on choisit des méthodes de calcul de réflectométrie et d'ellipsométrie,
- on choisit aussi une fonction d'erreur Er, représentative de l'écart entre deux spectres $\Psi_1$ et $\Psi_2$, les spectres $\Psi_1$ et $\Psi_2$ étant calculés ou mesurés sur un nombre de points supérieur au nombre m de noeuds,
- à l'aide des m longueurs d'ondes initiales, des M paramètres initiaux et de la loi d'interpolation, on met en oeuvre le processus d'optimisation suivant :
- on détermine un spectre théorique, noté $\overline{\Psi}$, en fonction des méthodes de calcul choisies, et de l'indice déduit par interpolation de sa valeur en $\lambda_i$, i allant de 1 à m, sur le spectre [$\lambda$min, $\lambda$max],
- on détermine l'erreur Er ($\Psi$, $\overline{\Psi}$), entre le spectre mesuré et le spectre théorique,
- on minimise cette erreur en faisant varier la position des valeurs des indices inconnus et/ou l'épaisseur de la couche et/ou les valeurs des indices de réfraction aux longueurs d'ondes initiales, et l'on obtient un spectre,
- on ajoute des longueurs d'ondes aux longueurs d'ondes initiales $\lambda_1$ ... $\lambda_m$, les longueurs d'ondes ajoutées constituant de nouveaux noeuds,
- on répète le procédé en choisissant un nombre m' de longueurs d'ondes initiales, m' étant supérieur à m, et M' paramètres initiaux, M' étant supérieur à M, jusqu'à ce que la précision sur chaque spectre ainsi représenté au mieux soit égale à une précision prédéfinie.

Dans ce cas, selon un premier mode de mise en oeuvre particulier, m est au moins égal à 2 ; selon un deuxième mode de mise en oeuvre particulier, m est égal à 1 et l'on choisit des indices de réfraction initiaux égaux.

Dans ce cas également, selon un mode de réalisation particulier, le matériau est non absorbant et le nombre M est égal à m, le coefficient d'extinction du matériau étant pris égal à 0 ; selon un autre mode de réalisation particulier, M est au moins égal à 2 m, on choisit en outre une loi d'interpolation pour le coefficient d'extinction du matériau, pour chaque longueur d'onde initiale $\lambda_i$, $1 \leq i \leq m$, on choisit en outre un coefficient d'extinction initial $k_i$, les longueurs d'ondes initiales étant en outre choisies de manière à pouvoir déterminer par interpolation le coefficient d'extinction pour toute longueur d'onde de l'intervalle [$\lambda$ min, $\lambda$ max], et dans le processus d'optimisation, on minimise l'erreur en faisant varier en outre les valeurs des coefficients d'extinction aux longueurs d'ondes initiales et les longueurs d'ondes ajoutées sont en outre placées de façon à représenter au mieux le spectre du coefficient d'extinction du matériau.

Dans le cas de cet autre mode de réalisation particulier, m peut être égal à 1 et l'on peut choisir des indices de réfraction initiaux égaux et des coefficients d'extinction initiaux égaux.

Encore dans le cas de cet autre procédé objet de l'invention, la couche de matériau peut être mince, c'est-à-dire avoir une épaisseur inférieure à la longueur de cohérence de la lumière utilisée pour les mesures, on peut choisir un paramètre initial supplémentaire, à savoir une épaisseur initiale de couche, et dans le processus d'optimisation on peut minimiser l'erreur en faisant en outre varier la valeur de l'épaisseur de couche ; dans une variante, la couche de matériau peut être épaisse, c'est-à-dire ne pas être mince, et M peut être au plus égal à 2 m ; dans une autre variante, l'épaisseur de la couche de matériau peut être connue avec une précision suffisante et M est au plus égal à 2 m.

La répartition des noeuds peut être homogène.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :

- la figure 1 est une vue schématique de dispositifs permettant de caractériser une couche conformément à l'invention,
- la figure 2 montre les variations de l'indice de réfraction en fonction de la longueur d'onde, pour un matériau suivant une loi de Cauchy (courbe I) et pour un matériau caractérisé conformément à l'invention (courbe II),
- la figure 3A (respectivement 3B) montre les variations de l'indice de réfraction (respectivement du coefficient d'extinction) en fonction de la longueur d'onde, pour un matériau suivant une loi à deux oscillateurs harmoniques (courbe I) et pour un matériau caractérisé conformément à l'invention, et
- la figure 4 illustre schématiquement les paramètres utilisés dans une généralisation d'exemples de l'invention.

## EXPOSÉ DÉTAILLÉ DE MODES DE RÉALISATION PARTICULIERS

L'invention propose une alternative aux procédés classiques, mentionnés plus haut. Elle permet d'allier la cohérence d'un modèle de couche (correspondant à une loi d'indice continue et à des épaisseurs physiques constantes), à la généralité concernant la loi d'indice à trouver (comme dans la méthode PAP). En outre, la résolution n'est limitée que par la résolution du spectre mesuré.

Dans le procédé objet de l'invention, le spectre d'indice n* ($\lambda$) est caractérisé par :

- un nombre réduit de "noeuds", qui sont des points de coordonnées $(\lambda_i, n_i, k_i)$ ou $(\lambda_i, n^*_i)$, avec $n_i = n\,(\lambda_i)$, $k_i = k\,(\lambda_i)$ et $n^*_i = n_i + jk_i$, où $j^2 = -1$, et
- une loi d'interpolation entre les noeuds, qui peut être, par exemple, linéaire, cubique, de type « spline » ou polynômiale (de degré quelconque).

Cette loi d'interpolation permet de calculer, à partir des noeuds, les indices de réfraction et les coefficients d'extinction pour les longueurs d'ondes situées entre les noeuds.

Par exemple, lorsque l'indice de réfraction est caractérisé par un ensemble de valeurs pour des longueurs d'ondes $\lambda_1 \ldots \lambda_m$, on peut utiliser une interpolation linéaire entre deux longueurs d'ondes $\lambda_i$ et $\lambda_{i+1}$ pour calculer l'indice n à la longueur d'onde $\lambda$ (voir le document [6] chapitre 3) :

$$\mathrm{n}\,(\lambda) = \frac{(\lambda_{i+1} - \lambda)n(\lambda_i) + (\lambda - \lambda_i)n(\lambda_{i+1})}{\lambda_{i+1} - \lambda_i}$$

avec $\lambda_i < \lambda < \lambda_{i+1}$

On peut faire de même pour le coefficient d'extinction.

Lorsque le nombre de noeuds le permet, des formules d'interpolation plus complexes, faisant intervenir les noeuds voisins, peuvent être utilisées (voir le document [6] chapitre 3).

Un modèle de couche est donc caractérisé par une épaisseur $\varepsilon$ et une famille de noeuds.

On donne ci-après un exemple du procédé objet de l'invention. Dans cet exemple, les mesures $\Psi$ sont constituées d'une mesure réflectométrique $R(\lambda)$ et d'une mesure ellipsométrique $S_{1,2}\,(\theta,\lambda)$ où $\theta$ est l'angle d'incidence du faisceau lumineux que l'on envoie sur la couche à étudier lors de la mesure d'ellipsométrie.

Cette couche est une couche mince de sorte que l'épaisseur de cette couche est aussi une variable du problème. En outre, on suppose qu'une seule couche est inconnue, cette couche étant formée sur un substrat connu.

Expliquons d'abord brièvement cet exemple, qui utilise un algorithme (algorithme de la « méthode des noeuds » conformément à l'invention).

A partir d'informations supposées sur l'épaisseur $\varepsilon$ de la couche étudiée et sur l'indice de réfraction $n(\lambda)$ et le coefficient d'extinction $k(\lambda)$ du matériau de cette couche, on construit des noeuds de départ (en faible nombre) et une épaisseur de départ $\varepsilon$.

On dispose ainsi de m noeuds et, par interpolation, on peut connaître $n(\lambda)$ et $k(\lambda)$ en dehors des valeurs des longueurs d'ondes associées aux noeuds.

A partir de l'épaisseur de départ $\varepsilon$ et de ces valeurs de départ $n(\lambda)$ et $k(\lambda)$, on détermine le spectre théorique $\overline{\Psi}$ en utilisant des calculs ellipsométriques et réflectrométriques.

Par ailleurs, au moyen de dispositifs d'ellipsométrie et de réflectométrie et d'un spectromètre, on obtient $S_{1,2}$ $(\theta,\lambda)$ et $R(\lambda)$ et l'on en déduit les mesures notées $\Psi$ (pour des conditions de mesure $\theta$ et $\lambda$).

On compare ensuite $\Psi$ et $\overline{\Psi}$ en utilisant une fonction d'erreur Er et l'on optimise la valeur de l'indice de réfraction et la valeur du coefficient d'extinction aux différents noeuds, ainsi que la valeur de l'épaisseur, en cherchant à minimiser Er $(\Psi, \overline{\Psi})$.

Lorsque ces valeurs sont optimisées et si la précision sur le spectre $n(\lambda)$, le spectre $k(\lambda)$ et l'épaisseur $\varepsilon$ n'est pas suffisante, on ajoute de nouveaux noeuds, on fait varier l'épaisseur $\varepsilon$, et l'on recommence la détermination de $\overline{\Psi}$, la comparaison de $\Psi$ et $\overline{\Psi}$ et l'optimisation que l'on a mentionnées plus haut, etc.

On arrête la boucle ainsi définie lorsque la précision sur chacun des spectres $n(\lambda)$ et $k(\lambda)$ et sur l'épaisseur $\varepsilon$ est jugée suffisante (ajustement satisfaisant de $\Psi$ et $\overline{\Psi}$).

Les spectres $n(\lambda)$, $k(\lambda)$ et l'épaisseur $\varepsilon$ sont ainsi caractérisés.

Dans un exemple donné à titre purement indicatif et nullement limitatif, on trouve une épaisseur $\varepsilon$ égale à 212,3nm pour la couche.

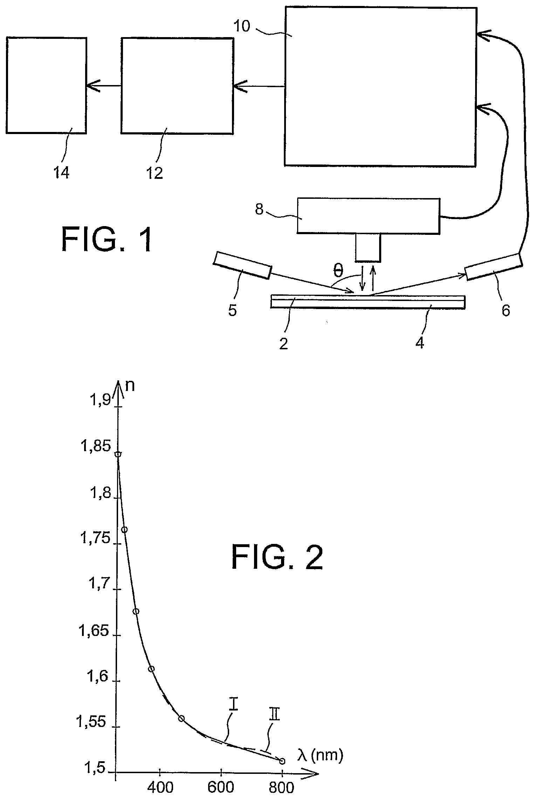

La figure 1 montre de façon schématique la couche étudiée 2, formée sur un substrat 4. On voit le dispositif d'ellipsométrie 5,6, le dispositif de réflectométrie 8 et le spectromètre. 10. On voit en outre des moyens électroniques de traitement 12, comprenant un ordinateur et permettant de caractériser $n(\lambda)$, $k(\lambda)$ et $\varepsilon$ en fonction des informations fournies par le spectromètre 10 et conformément au procédé de l'invention.

Ces moyens 12 sont munis de moyens d'affichage 14 qui permettent, en particulier, d'afficher la courbe des variations de n en fonction de $\lambda$ et la courbe des variations de k en fonction de $\lambda$.

Revenons de façon plus détaillée sur l'exemple donné.

Phase 1

Le procédé de cet exemple comporte d'abord une étape d'initialisation.

L'algorithme débute avec un nombre réduit de noeuds, plus précisément au moins un noeud. On peut donc débuter par un seul noeud, en imposant un indice de réfraction et un coefficient d'extinction qui restent constants lorsque la longueur d'onde varie.

On choisit des positions de noeuds de façon à pouvoir, à partir de cette famille de noeuds, déduire tout le spectre par interpolation. Le modèle de couche est donc à 3 paramètres ou plus, puisque l'épaisseur est aussi une variable à déterminer. La table d'indice sur tout le spectre est donc déduite des noeuds par interpolation.

C'est le cas lorsque l'épaisseur des couches est de l'ordre de grandeur de la longueur d'onde (couches minces). Mais lorsque l'épaisseur de la couche est supérieure à la longueur de cohérence de la source de lumière, l'épaisseur n'intervient quasiment plus dans le calcul de la réponse de la couche, et n'est donc plus une variable du problème.

Par exemple, dans le cas de disques optiques (CDROM), sur lesquels une couche très importante est déposée (son épaisseur est de l'ordre de 1 millimètre), le coefficient de réflexion d'une telle couche n'est plus fonction de l'épaisseur de la couche mais seulement de l'indice de réfraction de celle-ci, la longueur de cohérence du faisceau lumineux incident étant inférieure à l'épaisseur de la couche. Dans ce cas précis, la longueur de cohérence du faisceau incident est déterminée par la rugosité des couches.

On choisit, par exemple, de placer les deux premiers noeuds aux extrémités $\lambda$ min et $\lambda$ max du spectre. Les valeurs de l'indice complexe en ces extrémités sont choisies en fonction du type du matériau étudié. Par exemple, sur un spectre ellipsométrique entre 300nm et 800nm d'une couche mince de résine photosensible, on prend n(300nm)=n(800nm)=1,5 et k(300nm)=k(800nm)=0.

Lorsque le spectre n'est caractérisé que par deux noeuds, l'indice entre les extrêmes est déterminé par interpolation linéaire. Dans le cas considéré, on a donc n($\lambda$)=1,5 et k($\lambda$)=0 pour $\lambda$ appartenant à [300nm, 800nm].

A partir de trois noeuds, on choisit plutôt une interpolation cubique afin d'obtenir des formes de loi d'indice plus douces que celles obtenues par interpolation linéaire.

L'épaisseur de départ est, quant à elle, choisie aussi proche que possible de l'épaisseur réelle.

Phase 2

On procède ensuite à une détermination optimale des valeurs de l'indice de réfraction et du coefficient d'extinction sur les noeuds et de la valeur de l'épaisseur.

Pour ce faire, les spectres $\overline{\Psi}(\lambda)$ sont calculés à l'aide du modèle de couche utilisé, résultant du choix des noeuds, de la loi d'interpolation et de l'épaisseur de la couche.

Le modèle physique utilisé pour le calcul de $\overline{\Psi}$ est bien sûr fonction de la méthode de mesure utilisée, c'est-à-dire notamment de l'angle d'incidence de la lumière, du spectre utilisé et du modèle de couches minces ou de couches épaisses le cas échéant (voir par exemple les modèles de couches empilées dans le document [3]).

Les spectres $\Psi$ étant constitués par un ensemble de mesures de natures diverses (par exemple des mesures ellipsométriques et réflectométriques), on utilise pour les mesures de réflectométrie (respectivement d'ellipsométrie) une méthode de calcul de réflectométrie (respectivement d'ellipsométrie).

Les mesures réflectométriques et ellipsométriques sont combinées par l'intermédiaire d'une fonction d'erreur Er($\Psi,\overline{\Psi}$) qui est par exemple du genre de celle qui est définie par l'équation (1).

Grâce à une fonction de recherche, on minimise l'écart entre $\overline{\Psi}(\lambda)$ et $\Psi(\lambda)$ en faisant varier la valeur de l'indice de réfraction et la valeur du coefficient d'extinction à la position de chacun des noeuds ainsi que l'épaisseur de couche (si cette épaisseur est un facteur important dans le calcul de $\overline{\Psi}$). Lorsque l'écart est minimum c'est-à-dire lorsque Er($\Psi,\overline{\Psi}$) est minimum, cela signifie que les mesures réflectométriques et ellipsométriques coïncident au mieux (pour un nombre de noeuds donné).

A ce stade, on obtient, pour un nombre connu de noeuds et une position spectrale connue pour chacun de ces des noeuds, le modèle de couche (indice de réfraction, coefficient d'extinction et épaisseur) qui correspond au mieux à la couche réelle.

La validité du modèle trouvé est d'autant plus assurée que le nombre de mesures est grand. Pour avoir un grand nombre de mesures, on peut par exemple utiliser plusieurs angles d'incidence de la lumière $\theta_i$, $1 \leq i \leq \ell$, pour les spectres ellipsométriques, faire une mesure réflectométrique et faire des mesures goniométriques complémentaires.

Phase 3

Ensuite, on augmente le nombre de noeuds.

On ajoute un nombre fini de noeuds. Dans un premier mode de réalisation, les noeuds rajoutés sont positionnés de façon à représenter au mieux les spectres n($\lambda$) et k($\lambda$). A titre d'exemple, on place ces noeuds supplémentaires aux endroits où l'écart entre $\Psi$ et $\overline{\Psi}$ est maximum ou aux endroits en lesquels les noeuds sont les plus espacés. Et l'on retourne à la phase 2 tant que la précision sur chacun des spectres n($\lambda$) et k($\lambda$) et sur l'épaisseur $\varepsilon$ n'est pas suffisante, c'est-à-dire n'est pas égale à une précision prédéfinie.

Dans un deuxième mode de réalisation, on intercale de nouveaux noeuds entre deux noeuds de l'ensemble de noeuds préalablement choisis, ces nouveaux noeuds se répartissant de façon homogène sur le spectre.

Il convient toutefois de noter ce qui suit.

Lorsque l'on augmente le nombre de noeuds, il n'est pas nécessaire de conserver la position des anciens noeuds. Par exemple, admettons que l'on échantillonne uniformément un spectre de 400nm à 800nm avec 3 noeuds. Ces noeuds se situent donc respectivement à 400nm, 600nm et 800nm. Lorsque l'on passe à 6 noeuds, les trois noeuds additionnels ne peuvent être placés de façon à ce que le spectre soit uniformément échantillonné si l'on conserve la position des anciens noeuds. La position des 6 noeuds peut être définie, si l'on souhaite un échantillonnage uniforme par les valeurs 400, 480, 560, 640, 720, 800nm. L'ancien noeud central à 600nm disparaît donc. Pour calculer la valeur de l'indice à ces positions à partir des anciens noeuds, on procède par interpolation.

Dans ce qui suit, nous donnons deux exemples courants d'application de l'invention. Ces exemples mettent en jeu deux types de matériaux qui suivent des lois différentes.

A partir de mesures ellipsométriques et réflectométriques, nous proposons de retrouver les lois physiques suivies par ces matériaux.

Nous procédons de la façon suivante :

Un matériau fictif est créé, ce matériau suivant une loi théorique connue (une loi de Cauchy ou une loi d'oscillateurs harmoniques), avec des paramètres que nous fixons arbitrairement. Les variations de l'indice de réfraction complexe en fonction de la longueur d'onde sont ainsi parfaitement connues.

Nous imposons en outre au matériau une épaisseur de 200,00nm, sur un substrat de silicium, ce dernier étant également très bien connu.

Des mesures fictives (mesures ellipsométriques, mesures réflectométriques) sont calculées, puis bruitées de façon à introduire un défaut d'appareillage.

Tout se passe comme si nous avions des mesures réelles, effectuées sur le matériau. Mais, contrairement à la réalité, nous connaissons parfaitement l'indice de réfraction complexe puisque nous l'avons fixé, de même que nous avons fixé l'épaisseur de la couche de matériau.

Nous testons ici la méthode "en aveugle", c'est-à-dire que nous partons d'une épaisseur fausse (220nm) et d'indices de réfraction complexes faux, puisqu'ils sont sensés être inconnus.

Nous appliquons le procédé objet de l'invention puis nous comparons l'indice de réfraction complexe trouvé à l'indice de réfraction complexe théorique. Nous retrouvons bien les mêmes lois, très précisément, ainsi que la même épaisseur de couche.

Comme premier exemple, prenons un matériau dont l'indice de réfraction complexe suit une loi de Cauchy telle que :

$$n(\lambda) = 1{,}5 + 0{,}1\frac{300^2}{\lambda^2} + 0{,}1\frac{300^4}{\lambda^4}$$

$$k(\lambda) = 0$$

Cette loi d'indice est typique des résines photosensibles (dans la plage spectrale allant de 300nm à 800nm).

Afin de retrouver à l'aide de la méthode des noeuds (c'est-à-dire du procédé objet de l'invention) la loi d'indice mentionnée ci-dessus, nous effectuons deux mesures, à savoir une mesure ellipsométrique à un angle de 70° et une mesure réflectométrique.

Les conditions de traitement sont les suivantes :

- le spectre traité est compris entre 300nm et 800nm,
- au départ, les noeuds sont aux positions (300nm, 1,6) et (800nm, 1,6), c'est-à-dire que l'indice est considéré comme variant linéairement entre 300nm et 800nm, et que sa valeur est constante (égale à 1,6),
- le nombre de noeuds est augmenté itérativement selon la séquence 2→4→6,
- lors de la procédure d'augmentation des noeuds, la position en longueur d'onde de chaque noeud est calculée de façon que l'échantillonage en 1/λ soit uniforme (λ : longueur d'onde), la densité de points étant donc d'augmentée vers les faibles longueurs d'ondes,
- la loi d'interpolation est une loi cubique, lorsque le nombre de noeuds est supérieur à 2, sinon elle est linéaire, et

- l'algorithme de minimisation utilisé est un algorithme de type Simplex.

La figure 2 permet de comparer l'indice de réfraction correspondant au matériau fictif qui suit parfaitement une loi de Cauchy (courbe I) à l'indice de réfraction que nous trouvons par la méthode des noeuds (courbe II), à l'aide de 6 noeuds (représentés par des cercles sur la figure 2). Nous avons utilisé un $\Psi$ composé d'une mesure ellipsométrique $\{S_1(\lambda),S_2(\lambda)\}$ à 70° et d'une mesure réflectométrique $R(\lambda)$.

Nous aboutissons à une épaisseur de 199,8384nm.

Comme deuxième exemple, prenons un matériau dont l'indice de réfraction complexe suit une loi à deux oscillateurs harmoniques, telle que :

$$[n(E)+jk(E)]^2 = 1 + \sum_{i=1}^{2} \frac{A_i}{E+E_i+jG_i} - \frac{A_i}{E-E_i+jG_i}$$

avec

$$j^2 = -1 \text{ et } E = 1240/\lambda \text{ } (\lambda \text{ en nm})$$

$$A_1 = 0,25 \times 1,5^2 \qquad A_2 = 0,25 \times 1,5^2$$

$$E_1 = 1240/400 \qquad E_2 = 1240/300$$

$$G_1 = 0,3 \qquad G_2 = 0,3$$

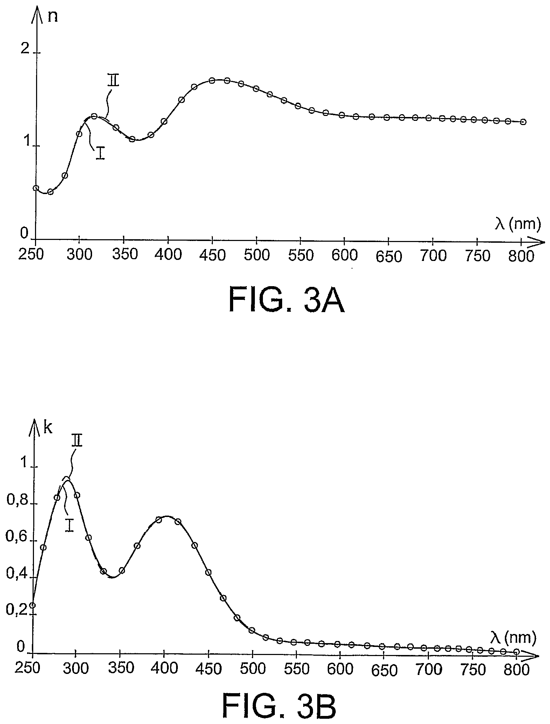

Dans ce deuxième exemple, la méthode des noeuds est appliquée à un ensemble de mesures ellipsométriques effectuées entre 250nm et 800nm, à 75°, 70°, 60° et 45°, avec en plus une mesure réflectométrique. L'épaisseur réelle du matériau étant de 200nm, on trouve une épaisseur de 200,25 nm avec la méthode des noeuds. L'ajustement sur la loi d'indice considérée dans ce deuxième exemple est très bon, comme le montrent les figures 3A et 3B.

Ces figures 3A et 3B illustrent respectivement les reconstructions des courbes $n(\lambda)$ et $k(\lambda)$ du matériau à l'aide de la méthode des noeuds. La reconstruction est effectuée à l'aide de quatre spectres ellipsométriques et d'un spectre réflectométrique. Les pics d'absorption réels sont très bien représentés par la courbe obtenue par interpolation cubique entre les noeuds (représentés par des cercles sur les figures 3A et 3B).

Sur la figure 3A, la courbe I (respectivement II) correspond à un indice de réfraction n qui suit parfaitement la loi choisie (respectivement à un indice de réfraction n trouvé par la méthode des noeuds).

Sur la figure 3B, la courbe I (respectivement II) correspond à un coefficient d'extinction k qui suit parfaitement la loi choisie (respectivement à un coefficient d'extinction k trouvé par la méthode des noeuds).

On vient de décrire des exemples de l'invention. On remarquera d'une manière plus générale que, dans cette dernière, on considère un ensemble X de valeurs, avec X= $\{n_1,n_2,...,n_i,...n_m,k_1,k_2,...,k_i,...,k_m,\varepsilon\}$, où

$n_i$ est la valeur de l'indice de réfraction (réel) au noeud correspondant à $\lambda_i$, $i\in\{1...m\}$, m étant le nombre de noeuds

$k_i$ est la valeur du coefficient d'absorption au noeud correspondant à $\lambda_i$, $i\in\{1...m\}$,

$\varepsilon$ est l'épaisseur de la couche étudiée.

Dans ce cas, l'opération de minimisation d'erreur Er $(\Psi,\overline{\Psi})$ revient à trouver l'ensemble ou « vecteur » X tel que Er soit minimum.

Lorsque l'on n'impose pas de contrainte particulière, la minimisation est une minimisation à 2xm+1 paramètres. On peut bien sûr ajouter des contraintes afin de diminuer le nombre de variables.

En particulier, si l'on sait que le matériau est non absorbant, on impose $k_i=0$ pour tout i de $\{1...m\}$ et X devient : X=$\{n_1,n_2...,n_i,...n_m,\varepsilon\}$.

Si, par une mesure complémentaire (par exemple une mesure de goniométrie ou une mesure directe non optique), on connaît l'épaisseur de la couche considérée avec une précision suffisante, l'épaisseur $\varepsilon$ n'est plus une variable et l'on a : X=$\{n_1,n_2,...,n_i,...n_m,k_1,k_2,...,k_i,...,k_m\}$.

Bien entendu, les deux options précédentes peuvent être combinées.

On explique dans ce qui suit un mode de mise en oeuvre de l'invention sous une forme plus générale que les exemples donnés précédemment.

Soit $\alpha(\lambda)$ une fonction de la longueur d'onde $\lambda$ de la lumière utilisée pour les mesures. On peut par exemple choisir :

$\alpha(\lambda)=\lambda$ (voir les figures 3A et 3B où le spectre est uniformément échantillonné en $\lambda$)

$\alpha(\lambda)=1/\lambda$ (voir la figure 2 où le spectre est uniformément échantillonné en $1/\lambda$)

$\alpha(\lambda)=hc/\lambda$ où h est la constante de Planck et c la vitesse de la lumière dans le vide, $\alpha(\lambda)$ étant alors homogène à une énergie.

Soit A l'intervalle du spectre de mesure, B l'intervalle spectral décrit par les « noeuds » et C l'intervalle d'intérêt.

L'intervalle C est inclus dans l'intervalle B ou égal à cet intervalle B. De même, l'intervalle B est inclus dans l'intervalle A ou égal à cet intervalle A.

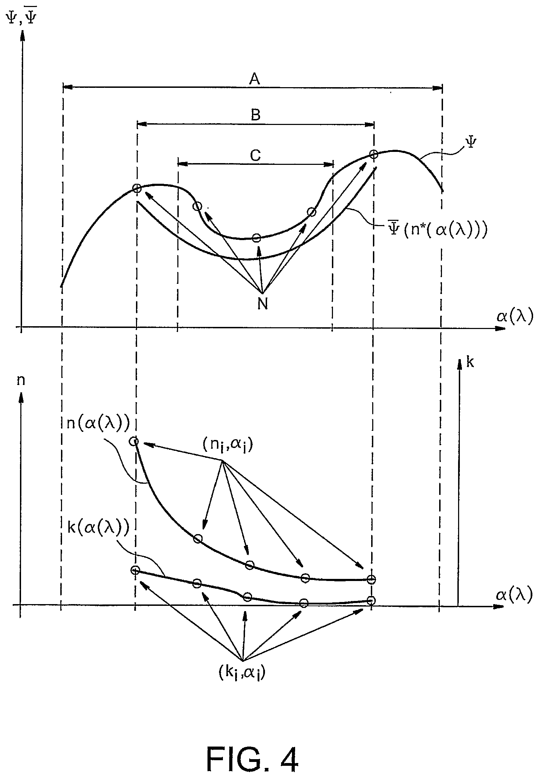

On précise que chacun des intervalles A, B et C est du type $[\alpha_m, \alpha_M]$ où $\alpha_m$ est inférieur à $\alpha_M$ et il existe deux longueurs d'ondes $\lambda_k$ et $\lambda_1$ telles que $\alpha_m=\alpha(\lambda_k)$ et $\alpha_M=\alpha(\lambda_1)$. A titre purement indicatif et nullement limitatif, la figure 4 montre un exemple des intervalles A, B et C et des courbes des variations de $\Psi$ et de $\overline{\Psi}$ en fonction de $\alpha(\lambda)$, $\overline{\Psi}$ étant en fait une fonction de $n^*(\alpha(\lambda))$.

Les cercles N représentent les noeuds.

$n^*$ est l'indice complexe, qui est exprimé ici en fonction de $\alpha(\lambda)$ et dont les parties réelle et imaginaire sont respectivement notées $n(\alpha(\lambda))$ et $k(\alpha(\lambda))$.

On voit également, à titre purement indicatif et nullement limitatif, un exemple de la courbe des variations de n (respectivement k) en fonction de $\alpha(\lambda)$, passant par des points de coordonnées $(n_i, \alpha_i)$ (respectivement $(k_i, \alpha_i)$, où $\alpha_i=\alpha(\lambda_i)$, $n_i=n(\alpha_i)$, $ki=k(\alpha_i)$, $1\le i\le m$ (m entier naturel non nul).

Sur la figure 4, on notera la correspondance entre les noeuds N, les points $(ni, \alpha_i)$ et les points $(k_i, \alpha_i)$.

Dans le mode de mise en oeuvre considéré, on utilise un algorithme comprenant les étapes suivantes :

1. on fait les mesures $\Psi$ sur l'intervalle A et l'on choisit les méthodes de calcul associées aux mesures (calculs ellipsométriques ou réflectométriques) ;

2. on choisit m nombres $\alpha_i$ (constituant m valeurs initiales de la fonction $\alpha$), i appartenant à $\{1,...,m\}$, avec $m\ge 1$, et $\{\alpha_i\}\subset A$ (les $\alpha_i$ correspondant aux « noeuds ») ; lorsque m>1, B est défini comme l'ensemble des points $\alpha$ tels que min $(\alpha_i) \le \alpha \le$ max$(\alpha_i)$ ; lorsque m=1, on a B=A ;

3. on choisit m valeurs initiales d'indice complexe $n^*$ aux m points $\alpha_i$, i appartenant à $\{1,...,m\}$ ;

4. si $m\ne 1$ on choisit une loi d'interpolation qui permet de calculer l'indice de réfraction $n(\alpha)$ sur l'intervalle B à partir des points $(\alpha_i, n_i)$, i appartenant à $\{1,...,m\}$ ; si m=1, alors $n(\alpha)=n_1(\alpha_1)$ sur tout l'intervalle B ;

5. on choisit M paramètres variables avec $M\le 2m+1$ ; ces paramètres peuvent être par exemple :

- les parties réelles des indices de réfraction aux points $\alpha_i$, i appartenant à $\{1,...,m\}$, ou
- les parties imaginaires des indices de réfraction en ces mêmes points, ou
- l'épaisseur du matériau dont on cherche l'indice de réfraction ;

6. on choisit une fonction d'erreur $Er(\Psi,\overline{\Psi})$ qui caractérise l'écart entre un spectre mesuré et un spectre théorique ; en général, l'erreur est mesurée sur l'intervalle C ;

7. à l'aide d'une fonction de minimisation de $Er(\Psi,\overline{\Psi})$ à M paramètres, on effectue la série d'étapes suivantes :

a) à l'aide de la fonction d'interpolation des $(\alpha_i, n_i)$ sur B, on déduit $n(\alpha)$ avec $\alpha$ appartenant à B ;

b) à l'aide de $n(\alpha)$ de l'épaisseur $\varepsilon$ et des méthodes de calcul de spectre, on calcule le spectre théorique $\overline{\Psi}(n(\alpha),\varepsilon)$ ;

c) on compare $\Psi$ et $\overline{\Psi}$ à l'aide de $Er=Er(\Psi,\overline{\Psi})$ ; si Er est suffisamment petite (c'est-à-dire si Er est inférieure à une valeur prédéfinie e), ou bien si Er est minimale, on passe à l'étape e), sinon on passe à l'étape d) ;

d) on fait varier les M paramètres de façon à tendre vers le minimum de Er et l'on revient à l'étape a) ;

e) si Er est inférieure à $\underline{e}$ on obtient donc un ensemble de M paramètres tel que $Er(\Psi,\overline{\Psi}(n(\alpha,M),\varepsilon))$ est minimum et le calcul de l'indice de réfraction est achevé : cet indice est pris égal à celui qui a été obtenu en dernier ; et si Er est supérieure ou égale à $\underline{e}$, on passe à l'étape 8) ;

8. on augmente m et l'on revient à l'étape 2).

Il convient de noter que la présente invention peut utiliser non seulement des échantillonnages en longueur d'onde ($\lambda$) mais encore des échantillonnages en fréquence ($c/\lambda$ ou, plus simplement $1/\lambda$), en énergie ($hc/\lambda$) et, plus généralement, en paramètre fonction de la longueur d'onde.

Il convient en outre de noter qu'une étape essentielle de l'algorithme (étape 8) mentionnée plus haut) n'est pas limitée à l'ajout d'un ensemble de noeuds aux noeuds déjà existants : elle englobe le cas plus général où le nombre de noeuds augmente. Cela veut dire, dans un mode de réalisation particulier de l'invention, qu'après minimisation avec 3 noeuds, si l'on veut passer à 6 noeuds au total, la position des 3 anciens noeuds est « effacée » de façon, par exemple, à avoir une densité de noeuds constante sur le spectre. En pratique, c'est la meilleure option. L'information sur l'ancienne position des anciens noeuds n'est pas perdue car la valeur des indices aux anciens noeuds est utilisée pour calculer la valeurs des 6 nouveaux noeuds (en fait 3 nouveaux noeuds plus trois anciens noeuds).

Ainsi, selon un mode de mise en oeuvre particulier du procédé objet de l'invention, on peut augmenter le nombre de valeurs initiales de la fonction $\alpha$ en ajoutant une ou plusieurs valeurs aux valeurs initiales existantes ; mais, selon un mode de mise en oeuvre préféré, on peut augmenter le nombre de valeurs initiales de la fonction $\alpha$ en remplaçant les valeurs initiales existantes par de nouvelles valeurs initiales dont le nombre est supérieur au nombre des valeurs initiales existantes.

La présente invention n'est pas limitée à la caractérisation de couches minces. Elle s'applique aussi à la caractérisation de couches épaisses.

En outre, la présente invention n'est pas limitée à la caractérisation d'une seule couche, formée sur un substrat. Elle s'applique aussi à la caractérisation de deux, ou plus de deux, couches formées sur un substrat.

Les documents cités dans la présente description sont les suivants :

[1] R.M.A. Azzam and N.M. Bashara, Ellipsometry and Polarized Light, North-Holland Physics Publishing, 1997, chapitre 6.

[2] B. K. Minhas, S.A. Coulombe, S. Sohail, H. Naqvi and J.R. McNeil, Ellipsometric scatterometry for the metrology of sub-0.1-$\mu$m-linewidth structures, Applied Optics, 37(22) : 5112-5115, 1998.

[3] M. Born and E. Wolf, Principle of Optics, Cambridge University Press édition.

[4] A.R. Forouhi and I. Bloomer, Optical dispersion relations for amorphous semiconductors and amorphous dielectrics, Physical Review B, 34(10) : 7018-7026, November 1986.

[5] F. L. Terry, Jr., A modified harmonic oscillator approximation scheme for the dielectric constants of AlxGa1-xAs, Journal of Applied Physics, 70(1), 1991, pages 409-417.

[6] W. H. Press, S. A. Teukolsky, W. T. Vetterling and B. P. Flannery, Numerical Recipes in C, Cambridge University Press, 1992, chapitres 3 et 10.

## Revendications

1. Procédé de caractérisation optique d'au moins une couche d'un matériau dans un intervalle A de valeurs prises par une fonction $\alpha$ d'une longueur d'onde optique $\lambda$, lorsque $\lambda$ varie dans un intervalle de longueurs d'ondes, cette couche étant formée sur un substrat, ce procédé étant **caractérisé en ce qu'**il comprend les étapes suivantes :

   1) on effectue un ensemble de mesures de réflectométrie et/ou d'ellipsométrie sur l'intervalle A, cet ensemble de mesures conduisant à un spectre mesuré, noté $\Psi$, et l'on choisit les méthodes de calcul associées à la nature des mesures et au type de couche à caractériser,

   2) on choisit m valeurs initiales $\alpha_1...\alpha_m$ de la fonction $\alpha$, appartenant à cet intervalle A, m étant un nombre entier au moins égal à 1, et l'on définit un intervalle B comme étant l'ensemble des points $\alpha$ de l'intervalle allant du plus petit au plus grand des nombres $\alpha_1...\alpha_m$, lorsque m est supérieur à 1, et comme étant l'intervalle A lorsque m vaut 1,

   3) on choisit m valeurs initiales complexes d'un indice de réfraction complexe n*=n+jk aux m points $\alpha_i$, i allant de 1 à m,

   4) lorsque m est différent de 1, on choisit une loi d'interpolation qui permet de calculer l'indice de réfraction $n(\alpha)$ du matériau sur l'intervalle B, à partir des points $(\alpha_i, n_i)$, avec $n_i=n(\alpha_i)$, i allant de 1 à m, et lorsque m vaut 1, $n(\alpha)$ est pris égal au nombre $n_1(\alpha_1)$ sur tout l'intervalle B,

   5) on choisit M paramètres variables, M étant inférieur ou égal à 2m+1,

   6) on choisit une fonction d'erreur Er(T, $\overline{\Psi}$) qui caractérise l'écart entre un spectre mesuré $\Psi$ et un spectre théorique $\overline{\Psi}$,

   7) à l'aide d'une fonction de minimisation de Er($\Psi$, $\overline{\Psi}$) à M paramètres, on effectue la série d'étapes suivante :

      a) à l'aide de la loi d'interpolation des $(\alpha_i,n_i)$ sur l'intervalle B, on déduit $n(\alpha)$, $\alpha$ appartenant à B,

      b) à l'aide de $n(\alpha)$ et de l'épaisseur $\varepsilon$ de la couche, et de méthodes de calcul de spectres, on calcule un spectre théorique $\overline{\Psi}(n(\alpha),\varepsilon)$,

      c) on compare $\Psi$ et $\overline{\Psi}$ à l'aide de Er($\Psi$, $\overline{\Psi}$) et, si Er($\Psi$, $\overline{\Psi}$) est suffisamment petite, c'est-à-dire inférieure à une valeur prédéfinie $\underline{e}$, ou est minimale, on passe à l'étape e), sinon on passe à l'étape d),

d) on fait varier les M paramètres variables de façon à tendre vers le minimum de Er($\Psi$, $\overline{\Psi}$) et l'on retourne à l'étape a),

e) si Er($\Psi$, $\overline{\Psi}$) est inférieure à <u>e</u>, on obtient donc un ensemble de M paramètres variables, pour lequel Er($\Psi$, $\overline{\Psi}$(n($\alpha$,M),$\varepsilon$)) est minimum et l'indice de réfraction est alors pris égal à celui qui a été obtenu en dernier, et si Er($\Psi$, $\overline{\Psi}$) est supérieure ou égale à <u>e</u> on passe à l'étape 8),

8) on augmente le nombre m de valeurs initiales de la fonction $\alpha$ et l'on retourne à l'étape 2).

**2.** Procédé selon la revendication 1, dans lequel on augmente le nombre de valeurs initiales de la fonction $\alpha$ en ajoutant une ou plusieurs valeurs aux valeurs initiales existantes.

**3.** Procédé selon la revendication 1, dans lequel on augmente le nombre de valeurs initiales de la fonction $\alpha$ en remplaçant les valeurs initiales existantes par de nouvelles valeurs initiales dont le nombre est supérieur au nombre des valeurs initiales existantes.

**4.** Procédé selon l'une quelconque des revendications 1 à 3, dans lequel chaque loi d'interpolation est choisie parmi les lois d'interpolation linéaires, les lois d'interpolation cubiques, les lois d'interpolation polynômiales et les lois d'interpolation par exemple de type fonction spline.

**5.** Procédé selon l'une quelconque des revendications 1 à 4 , dans lequel les valeurs initiales de la fonction $\alpha$ sont réparties de manière uniforme dans l'intervalle A, la répartition des noeuds étant ainsi homogène.

**6.** Procédé selon l'une quelconque des revendications 1 à 5, dans lequel $\alpha(\lambda)$ est choisi parmi $\lambda$, $1/\lambda$ et $hc/\lambda$, où h est la constante de Planck et c est la vitesse de la lumière dans le vide.

**7.** Procédé selon l'une quelconque des revendications 1 à 6, dans lequel on mesure l'erreur, à l'étape 6), sur un intervalle d'intérêt C qui est inclus dans l'intervalle B ou égal à cet intervalle B.

**8.** Procédé selon l'une quelconque des revendications 1 à 7, dans lequel les M paramètres variables sont les parties réelles des indices de réfraction aux points $\alpha_i$, i allant de 1 à m.

**9.** Procédé selon l'une quelconque des revendications 1 à 7, dans lequel les M paramètres variables sont les parties imaginaires des indices de réfraction aux points $\alpha_i$, i allant de 1 à m.

**10.** Procédé selon l'une quelconque des revendications 1 à 7, dans lequel les M paramètres variables sont constitués par l'épaisseur du matériau dont on cherche l'indice de réfraction.

**11.** Procédé selon la revendication 1, dans lequel $\alpha(\lambda)$ est égal à $\lambda$ et l'intervalle A est un intervalle de longueurs d'ondes [$\lambda$ min, max] et dans lequel:

- on effectue un ensemble de mesures de réflectométrie et/ou d'ellipsométrie, cet ensemble de mesures conduisant à un spectre mesuré, noté $\Psi$,
- on choisit m longueurs d'ondes initiales $\lambda_1$ ...$\lambda_m$ appartenant à cet intervalle, m étant un nombre entier au moins égal à 1, on associe, à chaque longueur d'onde, un indice de réfraction,
- on choisit une loi d'interpolation au moins pour l'indice de réfraction du matériau, pour les longueurs d'ondes comprises entre les longueurs d'ondes initiales $\lambda_1$...$\lambda_m$,
- on choisit M paramètres initiaux, M étant au moins égal à m, à savoir un indice de réfraction initial $n_i$ pour chaque longueur d'onde initiale $\lambda_i$, $1 \leq i \leq m$, les longueurs d'ondes initiales étant choisies de manière à pouvoir déterminer par interpolation au moins l'indice de réfraction pour toute longueur d'onde de l'intervalle [$\lambda$ min, $\lambda$ max], les couples ($\lambda_i$, $n_i$) étant appelés noeuds,
- on choisit des méthodes de calcul de réflectométrie et d'ellipsométrie,
- on choisit aussi une fonction d'erreur Er, représentative de l'écart entre deux spectres $\Psi_1$ et $\Psi_2$, les spectres $\Psi_1$ et $\Psi_2$ étant calculés ou mesurés sur un nombre de points supérieur au nombre m de noeuds,
- à l'aide des m longueurs d'ondes initiales, des M paramètres initiaux et de la loi d'interpolation, on met en oeuvre le processus d'optimisation suivant :

- on détermine un spectre théorique, noté $\overline{\Psi}$, en fonction des méthodes de calcul choisies, et de l'indice déduit par interpolation de sa valeur en $\lambda_i$, i allant de 1 à m, sur le spectre [$\lambda$min, $\lambda$max],

- on détermine l'erreur Er ($\Psi$, $\overline{\Psi}$), entre le spectre mesuré et le spectre théorique
- on minimise cette erreur en faisant varier la position des valeurs des indices inconnus et/ou l'épaisseur de la couche et/ou les valeurs des indices de réfraction aux longueurs d'ondes initiales, et l'on obtient un spectre,
- on ajoute des longueurs d'ondes aux longueurs d'ondes initiales $\lambda_1 \ldots \lambda_m$, les longueurs d'ondes ajoutées constituant de nouveaux noeuds,
- on répète le procédé en choisissant un nombre m' de longueurs d'ondes initiales, m' étant supérieur à m, et M' paramètres initiaux, M' étant supérieur à M, jusqu'à ce que la précision sur chaque spectre ainsi représenté au mieux soit égale à une précision prédéfinie.

12. Procédé selon la revendication 11, dans lequel m est au moins égal à 2.

13. Procédé selon la revendication 11, dans lequel m est égal à 1 et l'on choisit des indices de réfraction initiaux égaux.

14. Procédé selon l'une quelconque des revendications 11 à 13, dans lequel le matériau est non absorbant et le nombre M est égal à m, le coefficient d'extinction du matériau étant pris égal à 0.

15. Procédé selon l'une quelconque des revendications 11 à 13, dans lequel :

- M est au moins égal à 2 m,
- on choisit en outre une loi d'interpolation pour le coefficient d'extinction du matériau,
- pour chaque longueur d'onde initiale $\lambda_i$, $1 \leq i \leq m$, on choisit en outre un coefficient d'extinction initial $k_i$, les longueurs d'ondes initiales étant en outre choisies de manière à pouvoir déterminer par interpolation le coefficient d'extinction pour toute longueur d'onde de l'intervalle [$\lambda$ min, $\lambda$ max],
- dans le processus d'optimisation, on minimise l'erreur en faisant varier en outre les valeurs des coefficients d'extinction aux longueurs d'ondes initiales et les longueurs d'ondes ajoutées sont en outre placées de façon à représenter au mieux le spectre du coefficient d'extinction du matériau.

16. Procédé selon la revendication 15, dans lequel m est égal à 1 et l'on choisit des indices de réfraction initiaux égaux et des coefficients d'extinction initiaux égaux.

17. Procédé selon l'une quelconque des revendications 11 à 16, dans lequel la couche de matériau est mince, c'est-à-dire a une épaisseur inférieure à la longueur de cohérence de la lumière utilisée pour les mesures, on choisit un paramètre initial supplémentaire, à savoir une épaisseur initiale de couche, et dans le processus d'optimisation on minimise l'erreur en faisant en outre varier la valeur de l'épaisseur de couche.

18. Procédé selon l'une quelconque des revendications 11 à 16, dans lequel la couche de matériau est épaisse, c'est-à-dire n'est pas mince, et M est au plus égal à 2 m.

19. Procédé selon l'une quelconque des revendications 11 à 16, dans lequel l'épaisseur de la couche de matériau est connue avec une précision prédéfinie et M est au plus égal à 2 m.

20. Procédé selon l'une quelconque des revendications 11 à 19, dans lequel chaque loi d'interpolation est choisie parmi les lois d'interpolation linéaires, les lois d'interpolation cubiques, les lois d'interpolation polynômiales et les lois d'interpolation de type fonction spline.

21. Procédé selon l'une quelconque des revendications 11 à 20 , dans lequel la répartition des noeuds est homogène.

**Patentansprüche**

1. Verfahren zur optischen Charakterisierung wenigstens einer Schicht eines Materials in einem Intervall A von Werten, die von einer Funktion $\alpha$ einer optischen Wellenlänge $\lambda$ angenommen werden, wenn $\lambda$ in einem Intervall von Wellenlängen variiert, wobei diese Schicht auf einem Substrat gebildet ist, wobei dieses Verfahren **dadurch gekennzeichnet ist, dass** es die folgenden Schritte umfasst:

1) man führt eine Gesamtheit von Reflektometrie- und/oder Ellipsometriemessungen auf dem Intervall A durch, wobei diese Gesamtheit von Messungen zu einem gemessenen Spektrum führt, genannt $\Psi$, und man wählt die Rechenverfahren aus, die der Art der Messungen und dem Typ der zu charakterisierenden Schicht zugeordnet sind,

2) man wählt m Anfangswerte $\alpha_1...\alpha_m$ der Funktion $\alpha$, die zu diesem Intervall A gehören, wobei m eine ganze Zahl wenigstens gleich 1 ist, und man definiert ein Intervall B als die Gesamtheit der Punkte $\alpha$ des Intervalls von der kleinsten bis zur größten der Zahlen $\alpha_1...\alpha_m$, wenn m größer als 1 ist, und als das Intervall A, wenn m gleich 1 ist,

3) man wählt m komplexe Anfangswerte eines komplexen Brechungsindex n*= n+jk an den m Punkten $\alpha_i$, wobei i von 1 bis m geht,

4) wenn m von 1 verschieden ist, wählt man ein Interpolationsgesetz, das die Berechnung des Brechungsindex $n(\alpha)$ des Materials auf dem Intervall B ausgehend von den Punkten $(\alpha_i, n_i)$ mit $n_i= n(\alpha_i)$ erlaubt, wobei i von 1 bis m geht, und wenn m gleich 1 ist, wird $n(\alpha)$ auf dem gesamten Intervall B gleich der Zahl $n_1(\alpha_1)$ gesetzt,

5) man wählt M variable Parameter, wobei M kleiner oder gleich 2m+1 ist,

6) man wählt eine Fehlerfunktion Er $(\Psi,\overline{\Psi})$, die den Abstand zwischen einem gemessenen Spektrum $\Psi$ und einen theoretischen Spektrum $\overline{\Psi}$ charakterisiert,

7) mit Hilfe einer Funktion zur Minimierung von Er $(\Psi,\overline{\Psi})$ mit M Parametern führt man die folgende Serie von Schritten durch:

    a) mit Hilfe des Interpolationsgesetzes der $(\alpha_i, n_i)$ auf dem Intervall B leitet man $n (\alpha)$ her, wobei $\alpha$ zu B gehört,
    b) mit Hilfe von $n (\alpha)$ und der Dicke $\varepsilon$ der Schicht sowie von Verfahren zur Berechnung von Spektren berechnet man ein theoretisches Spektrum $\Psi (n (\alpha), \varepsilon)$,
    c) man vergleicht $\Psi$ und $\overline{\Psi}$ mit Hilfe von Er$(\Psi,\overline{\Psi})$ und, falls Er$(\Psi,\overline{\Psi})$ hinreichend klein ist, das heißt kleiner als ein vordefinierter Wert $\underline{e}$, oder minimal ist, geht man zum Schritt e) weiter, ansonsten geht man zum Schritt d) weiter,
    d) man variiert die M variablen Parameter derart, dass zum Minimum von Er $(\Psi,\overline{\Psi})$ gestrebt wird, und man kehrt zum Schritt a) zurück,
    e) wenn Er $(\Psi,\overline{\Psi})$ kleiner als $\underline{e}$ ist, erhält man somit eine Gesamtheit von M variablen Parameter, für die Er $(\Psi,\overline{\Psi}(n(\alpha, M), \varepsilon))$ minimal ist, und der Brechungsindex wird dann gleich jenem gesetzt, der als letztes erhalten wurde, und falls Er $(\Psi,\overline{\Psi})$ größer oder gleich $\underline{e}$ ist, geht man zum Schritt 8) weiter,

8) man erhöht die Zahl m von Anfangswerten der Funktion $\alpha$, und man kehrt zum Schritt 2) zurück.

**2.** Verfahren nach Anspruch 1, bei dem man die Zahl von Anfangswerten der Funktion $\alpha$ erhöht, indem man einen oder mehr Werte zu den existierenden Anfangswerten hinzufügt.

**3.** Verfahren nach Anspruch 1, bei dem man die Zahl von Anfangswerten der Funktion $\alpha$ erhöht, indem man die existierenden Anfangswerte durch neue Anfangswerte ersetzt, deren Zahl größer ist als die Zahl der existierenden Anfangswerte.

**4.** Verfahren nach einem der Ansprüche 1 bis 3, bei dem jedes Interpolationsgesetz ausgewählt ist aus den linearen Interpolationsgesetzen, den kubischen Interpolationsgesetzen, den Polynom-Interpolationsgesetzen und den Interpolationsgesetzen zum Beispiel vom Typ Splinefunktion.

**5.** Verfahren nach einem der Ansprüche 1 bis 4, bei dem die Anfangswerte der Funktion $\alpha$ in gleichmäßiger Weise in dem Intervall A verteilt sind, wobei die Verteilung der Knoten somit homogen ist.

**6.** Verfahren nach einem der Ansprüche 1 bis 5, bei dem $\alpha (\lambda)$ ausgewählt ist aus $\lambda$, $1/\lambda$ und $hc/\lambda$, wobei h die Plancksche Konstante ist, und c die Vakuum-Lichtgeschwindigkeit ist.

**7.** Verfahren nach einem der Ansprüche 1 bis 6, bei dem man im Schritt 6) den Fehler auf einem interessierenden Intervall C misst, das in dem Intervall B enthalten oder gleich diesem Intervall B ist.

**8.** Verfahren nach einem der Ansprüche 1 bis 7, bei dem die M variablen Parameter die Realteile der Brechungsindices an den Punkten $\alpha_i$ sind, wobei i von 1 bis m geht.

**9.** Verfahren nach einem der Ansprüche 1 bis 7, bei dem die M variablen Parameter die Imaginärteile der Brechungsindices an den Punkten $\alpha_i$ sind, wobei i von 1 bis m geht.

**10.** Verfahren nach einem der Ansprüche 1 bis 7, bei dem die M variablen Parameter durch die Dicke des Materials gebildet sind, dessen Brechungsindex man sucht.

**11.** Verfahren nach Anspruch 1, bei dem $\alpha(\lambda)$ gleich $\lambda$ ist, und das Intervall A ein Intervall von Wellenlängen [$\lambda$ min, $\lambda$ max] ist, und bei dem:

- man eine Gesamtheit von Reflektometrie- und/oder Ellipsometriemessungen durchführt, wobei diese Gesamtheit von Messungen zu einem gemessenen Spektrum führt, genannt $\Psi$,
- man m Anfangswellenlängen $\lambda_1...\lambda_m$ auswählt, die zu diesem Intervall gehören, wobei m eine ganze Zahl wenigstens gleich 1 ist, und man jeder Wellenlänge einen Brechungsindex zuordnet,
- man ein Interpolationsgesetz wenigstens für den Brechungsindex des Materials für die Wellenlängen auswählt, die zwischen den Anfangswellenlängen $\lambda_1...\lambda_m$ enthalten sind,
- man M Anfangsparameter auswählt, wobei M wenigstens gleich m ist, nämlich einen Anfangsbrechungsindex $n_i$ für jede Anfangswellenlänge $\lambda_i$, $1 \leq i \leq$ m, wobei die Anfangswellenlängen derart gewählt werden, dass durch Interpolation wenigstens der Brechungsindex für jede Wellenlänge des Intervalls [$\lambda$ min, $\lambda$ max] bestimmt werden kann, wobei die Paare ($\lambda_i$, $n_i$) Knoten genannt werden,
- man Reflektometrie- und Ellipsometrie-Rechenverfahren auwählt,
- man ferner eine Fehlerfunktion Er auswählt, die repräsentativ ist für den Abstand zwischen zwei Spektren $\Psi_1$ und $\Psi_2$, wobei die Spektren $\Psi_1$ und $\Psi_2$ auf einer Zahl von Punkten berechnet oder gemessen werden, die größer als die Zahl m von Knoten ist,
- man mit Hilfe der m Anfangswellenlängen, der M Anfangsparameter und des Interpolationsgesetzes das folgende Optimierungsverfahren durchführt:
- man bestimmt ein theoretisches Spektrum genannt $\overline{\Psi}$, als Funktion der ausgewählten Rechenverfahren und des Index, der durch Interpolation seines Werts bei $\lambda_i$, wobei i von 1 bis m geht, auf dem Spektrum [$\lambda$ min, $\lambda$ max] hergeleitet wird,
- man bestimmt den Fehler Er ($\Psi$, $\overline{\Psi}$) zwischen dem gemessenen Spektrum und dem theoretischen Spektrum,
- man minimiert diesen Fehler durch Variieren der Position der Werte der unbekannten Indices und/oder der Dicke der Schicht und/oder der Werte der Brechungsindices bei den Anfangswellenlängen, und man erhält ein Spektrum,
- man fügt Wellenlängen zu den Anfangswellenlängen $\lambda_1...\lambda_m$ hinzu, wobei die hinzugefügten Wellenlängen neue Knoten bilden,
- man wiederholt das Verfahren durch Auswählen einer Zahl m' von Anfangswellenlängen, wobei m' größer als m ist, und von M' Anfangsparametern, wobei M' größer als M ist, bis die Genauigkeit bei jedem derart repräsentierten Spektrum am besten gleich einer vordefinierten Genauigkeit ist.

**12.** Verfahren nach Anspruch 11, bei dem m wenigstens gleich 2 ist.

**13.** Verfahren nach Anspruch 11, bei dem m gleich 1 ist, und man gleiche Anfangsbrechungsindices wählt.

**14.** Verfahren nach einem der Ansprüche 11 bis 13, bei dem das Material nicht absorbierend ist, und M gleich m ist, wobei der Extinktionskoeffizient des Materials gleich 0 gesetzt wird.

**15.** Verfahren nach einem der Ansprüche 11 bis 13, bei dem:

- M wenigstens gleich 2 m ist,
- man ferner ein Interpolationsgesetz für den Extinktionskoeffizienten des Materials wählt,
- man für jede Anfangswellenlänge $\lambda_i$, 1 < i < m, ferner einen Anfangsextinktionskoeffizienten $k_i$ wählt, wobei die Anfangswellenlängen ferner derart gewählt werden, dass durch Interpolation der Extinktionskoeffizient für jede Wellenlänge des Intervalls [$\lambda$ min, $\lambda$ max] bestimmt werden kann,
- man in dem Optimierungsverfahren den Fehler minimiert, indem man ferner die Werte der Extinktionskoeffizienten bei den Anfangswellenlängen variiert, und die hinzugefügten Wellenlängen ferner derart platziert werden, dass sie das Spektrum des Extinktionskoeffizienten des Materials am besten repräsentieren.

**16.** Verfahren nach Anspruch 15, bei dem m gleich 1 ist, und man gleiche Anfangsbrechungsindices und gleiche Anfangsextinktionskoeffizienten wählt.

**17.** Verfahren nach einem der Ansprüche 11 bis 16, bei dem die Materialschicht dünn ist, das heißt eine Dicke kleiner als die Kohärenzlänge des für die Messungen verwendeten Lichts hat, man einen zusätzlichen Anfangsparameter wählt, nämlich eine Anfangsdicke der Schicht und man in dem Optimierungsverfahren den Fehler minimiert, indem man ferner den Wert der Schichtdicke variiert.

18. Verfahren nach einem der Ansprüche 11 bis 16, bei dem die Materialschicht dick ist, das heißt nicht dünn ist, und M höchstens gleich 2 m ist.

19. Verfahren nach einem der Ansprüche 11 bis 16, bei dem die Dicke der Materialschicht mit einer vordefinierten Genauigkeit bekannt ist, und M höchstens gleich 2 m ist.

20. Verfahren nach einem der Ansprüche 11 bis 19, bei dem jedes Interpolationsgesetz ausgewählt ist aus den linearen Interpolationsgesetzen, den kubischen Interpolationsgesetzen, den Polynom-Interpolationsgesetzen und den Interpolationsgesetzen von Typ Splinefunktion.

21. Verfahren nach einem der Ansprüche 11 bis 20, bei dem die Verteilung der Knoten homogen ist.

**Claims**

1. Method for optical characterisation of at least one layer of material in an interval A of values taken by a function $\alpha$ of an optical wavelength $\lambda$, when $\lambda$ varies in an interval of wavelengths, this layer being created on a substrate, this method being **characterised in that** it comprises the following stages:

   1) we carry out a group of reflectometry and/or ellipsometry measurements over the interval A, this set of measurements leading to a measured spectrum, marked $\Psi$, and we choose the methods for calculating associated with the nature of the measurements and with the type of layer to be characterised;
   2) we choose m initial values $\alpha_1 ... \alpha_m$ of the function $\alpha$, belonging to this interval A, m being a whole number at least equal to 1, and we define an interval B as being the set of points $\alpha$ of the interval ranging from the smallest to the biggest number among $\alpha_1 ... \alpha_m$, when m is greater than 1, and as being the interval A when m equals 1;
   3) we choose m complex initial values of a complex refraction index n*=n+jk for the m points $\alpha_i$, i ranging from 1 to m;
   4) when m is not 1, we choose an interpolation law which allows to calculate the refraction index n($\alpha$) of the material over the interval B, from the points ($\alpha_i$, $n_i$), with $n_i$=n($\alpha_i$), i ranging from 1 to m, and when m equals 1, n($\alpha$) is taken equal to the number $n_1(\alpha_1)$ over the entire interval B;
   5) we choose M variable parameters, M being less than or equal to 2m+1;
   6) we choose an error function Er($\Psi$, $\overline{\Psi}$) which characterises the difference between a measured spectrum $\Psi$ and a theoretical spectrum $\overline{\Psi}$ ;
   7) using a minimising function of Er($\Psi$, $\overline{\Psi}$) with M parameters, we perform the following series of stages:

      a) by applying the interpolation law of ($\alpha_i$, $n_i$) over the interval B, we deduce n($\alpha$), $\alpha$ belonging to B;
      b) by using n($\alpha$) and the thickness $\varepsilon$ of the layer, and methods for calculating spectrums, we calculate a theoretical spectrum $\Psi$ (n($\alpha$), $\varepsilon$) ;
      c) we compare $\Psi$ and $\overline{\Psi}$ by using Er($\Psi$, ) and, if Er($\Psi$, $\overline{\Psi}$) is sufficiently small, i.e. less than a predetermined value e, or is minimal, we go to stage e), otherwise we go to stage d);
      d) we make the M variable parameters vary so as to tend to the minimum of Er ($\Psi$, $\overline{\Psi}$), and we return to stage a);
      e) if Er($\Psi$, $\overline{\Psi}$) is less than $\underline{e}$, we then obtain a set of M variable parameters, for which Er ($\Psi$, $\overline{\Psi}$ (n($\alpha$, M), $\varepsilon$)) is minimal and the refraction index is then taken equal to the last one obtained, and if Er ($\Psi$, $\overline{\Psi}$) is greater or equal to $\underline{e}$ we go to stage 8).

   8) we increase the number m of initial values of the function $\alpha$ and we return to stage 2).

2. Method according to claim 1, in which we increase the number of initial values of the function $\alpha$ by adding one or several values to the extant initial values.

3. Method according to claim 1, in which we increase the number of initial values of the function $\alpha$ by replacing the extant initial values with new initial values whose number is greater than the number of extant initial values.

4. Method according to any one of claims 1 to 3, in which each interpolation law is chosen from among the linear interpolation laws, the cubic interpolation laws, the polynomial interpolation laws and the interpolation laws for example of spline function type.

5. Method according to any one of claims 1 to 4, in which the initial values of the function $\alpha$ are evenly distributed over the interval A, the distribution of the nodes thus being homogenous.

6. Method according to any one of claims 1 to 5, in which $\alpha(\lambda)$ is chosen among $\lambda$, $1/\lambda$ and $hc/\lambda$, where h is the Planck's constant and c the speed of light in vacuum.

7. Method according to any one of claims 1 to 6, in which we measure the error, at stage 6), over an interest interval C which is included in the interval B or equal to this interval B.

8. Method according to any one of claims 1 to 7, in which the M variable parameters are the real parts of the refraction indexes at points $\alpha_i$, i ranging from 1 to m.

9. Method according to any one of claims 1 to 7, in which the M variable parameters are the imaginary parts of the refraction indexes at points $\alpha_i$, i ranging from 1 to m.

10. Method according to any one of claims 1 to 7, in which the M variable parameters are constituted by the thickness of the material for which we are searching the refraction index.

11. Method according to claim 1, wherein $\alpha(\lambda)$ is equal to $\lambda$ and the interval A is an interval of wavelengths [$\lambda$ min, $\lambda$ max], and wherein:

- we carry out a set of reflectometry and/or ellipsometry measurements, this set of measurements leading to a measured spectrum, marked $\Psi$;
- we choose m initial wavelengths $\lambda_1 ...\lambda_m$ belonging to this interval, m being a whole number at least equal to 1, we associate a refraction index to each wavelength;
- we choose an interpolation law at least for the refraction index of the material, for wavelengths lying between the initial wavelengths $\lambda_1 ...\lambda_m$;
- we choose M initial parameters, M being at least equal to m, namely an initial refraction index $n_i$ for each initial wavelength $\lambda_i$, $1 \leq i \leq m$, the initial wavelengths being chosen so as to determine via interpolation at least the refraction index for any wavelength within the interval [$\lambda$ min, $\lambda$ max], the couples ($\lambda_i$, $n_i$) being called nodes;
- we choose reflectometry and ellipsometry methods of calculation;
- we also choose an error function Er, representative of the difference between two spectrums $\Psi_1$ and $\Psi_2$, the spectrums $\Psi_1$ and $\Psi_2$ being calculated or measured over a number of points greater than the number m of nodes;
- using the m initial wavelengths, the M initial parameters and the interpolation law, we implement the following optimisation process:

- we determine a theoretical spectrum, marked $\overline{\Psi}$, depending on the chosen methods of calculation, and on the index deduced via interpolation of its value at $\lambda_i$, i ranging from 1 to m, over the spectrum [$\lambda$min, $\lambda$max];
- we determine the error Er ($\Psi$, $\overline{\Psi}$), between the measured spectrum and the theoretical spectrum;
- we minimise this error by varying the position of the values of the unknown indexes and/or the thickness of the layer and/or the values of the refraction indexes with initial wavelengths, and we obtain a spectrum;
- we add other wavelengths to the initial wavelengths $\lambda i ...\lambda m$, the added wavelengths constituting new nodes;
- we repeat the method by choosing a number m' of initial wavelengths, m' being greater than m, and M' initial parameters, M' being greater than M, until the accuracy of each spectrum thus best represented is equal to a predetermined accuracy.

12. Method according to claim 11, in which m is at least equal to 2.

13. Method according to claim 11, in which m is at least equal to 1 and we choose equal initial refraction indexes.

14. Method according to any one of claims 11 to 13, in which the material is non absorbent and the number M is equal to m, the extinction coefficient of the material being set equal to 0.

**15.** Method according to any one of claims 11 to 13, in which :

- M is at least equal to 2m;
- we furthermore choose an interpolation law for the extinction coefficient of the material;
- for each initial wavelength $\lambda i$, $1 \leq i \leq m$, furthermore we choose an initial extinction coefficient $k_i$, the initial wavelengths furthermore being chosen so as to be able to determine via interpolation the extinction coefficient for any wavelength of interval [$\lambda$ min, $\lambda$ max];
- within the optimisation process, we minimise the error by also varying the values of the extinction coefficients at the initial wavelengths and the added wavelengths are furthermore placed so as to best represent the spectrum of the extinction coefficient of the material.

**16.** Method according to claim 15, in which m is equal to 1 and we choose equal initial refraction indexes and equal initial extinction coefficients.

**17.** Method according to any one of claims 11 to 16, in which the layer of material is thin, i.e. with a thickness less than the coherence length of the light used for measuring, we choose an additional initial parameter, namely an initial layer thickness, and in the optimisation process we minimise the error by also varying the value of the layer thickness.

**18.** Method according to any one of claims 11 to 16, in which the layer of material is thick, i.e. not thin, and M is at most equal to 2 m.

**19.** Method according to any one of claims 11 to 16, in which the thickness of the layer of material is known with a predetermined accuracy and M is at most equal to 2 m.

**20.** Method according to any one of claims 11 to 19, in which each interpolation law is chosen from among the linear interpolation laws, the cubic interpolation laws, the polynomial interpolation laws and the interpolation laws for example of spline function type.

**21.** Method according to any one of claims 11 to 20, in which the distribution of the nodes is homogenous.

FIG. 1

FIG. 2

FIG. 3A

FIG. 3B

FIG. 4

**EP 1 579 197 B1**

## RÉFÉRENCES CITÉES DANS LA DESCRIPTION

**Littérature non-brevet citée dans la description**

- **BHATTACHARYYA et al.** SPECTROSCOPIC ELLIPSOMETRY OF MULTILAYER DIELECTRIC COATINGS. *VACUUM,* vol. 60 (4), 419-424
- **GARRIGUES JEAN.** *La méthode des éléments finis,* Janvier 2002
- **R.M.A. AZZAM ; N.M. BASHARA.** Ellipsometry and Polarized Light. North-Holland Physics Publishing, 1997
- **B. K. MINHAS ; S.A. COULOMBE ; S. SOHAIL ; H. NAQVI ; J.R. MCNEIL.** Ellipsometric scatterometry for the metrology of sub-0.1-$\mu$m-linewidth structures. *Applied Optics,* 1998, vol. 37 (22), 5112-5115
- **M. BORN ; E. WOLF.** Principle of Optics. Cambridge University Press édition
- **A.R. FOROUHI ; I. BLOOMER.** Optical dispersion relations for amorphous semiconductors and amorphous dielectrics. *Physical Review B,* Novembre 1986, vol. 34 (10), 7018-7026
- **F. L. TERRY, JR.** A modified harmonic oscillator approximation scheme for the dielectric constants of AlxGa1-xAs. *Journal of Applied Physics,* 1991, vol. 70 (1), 409-417
- **W. H. PRESS ; S. A. TEUKOLSKY ; W. T. VETTERLING ; B. P. FLANNERY.** Numerical Recipes in C. Cambridge University Press, 1992